Europäisches Patentamt

European Patent Office

Office européen des brevets

(19)

(11) **EP 1 122 154 A2**

(12) **EUROPEAN PATENT APPLICATION**

(43) Date of publication:
**08.08.2001 Bulletin 2001/32**

(51) Int Cl.⁷: **B62D 29/00**

(21) Application number: **01101686.2**

(22) Date of filing: **30.01.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **31.01.2000 US 494844**

(71) Applicant: **Sika Corporation**
**Madison Heights, MI 48071 (US)**

(72) Inventors:
• **Fitzgerald, Gerald E.**
**Clinton Township, MI 48038 (US)**
• **Stratman, Randy**
**Waterford, MI 43872 (US)**
• **Chang, Chin- Jui**
**Troy, MI 48098 (US)**

(74) Representative: **Blum, Rudolf Emil Ernst et al**
**c/o E. Blum & Co**
**Patentanwälte**
**Vorderberg 11**
**8044 Zürich (CH)**

(54) **Structural reinforcing member with ribbed thermally expansible foaming material**

(57)    An expansible foaming reinforcing member (10) for reinforcing a hollow structural member of an automobile, aircraft, boat, etc. is provided. The reinforcing member (10) includes a synthetic, resin-based expansible reinforcing material (12) secured to a carrier (14) which maintains the reinforcing member (10) at the desired location within the structural member until thermal expansion. The reinforcing material (12) is formed of a thermally expansible composition which preferably has an expansion temperature similar to the expansion temperatures achieved in specific stages of a particular manufacturing process (e.g., such as the temperature at which the paint bake or powder bake stage is carried out in the automobile manufacturing process). The reinforcing material (12) of the inventive reinforcing member (10) comprises a plurality of spaced-apart fins or ribs (16). During heat activation, heated air can travel between the ribs (16), thus allowing a grater surface area of the reinforcing material (12) to be exposed to heat leading to improved expansion. The ribs (16) can be configured to a shape corresponding to the cross-sectional shape of the cavity of the structural member, thus permitting the reinforcing member (10) to be inserted into small, irregular shaped cavities.

FIG. 1

**Description**

BACKGROUND OF THE INVENTION

Field of the Invention

This present invention relates generally to thermally expansible, foaming, structural reinforcing members used to provide localized stiffness to frames, rails, cavities, panels, and other structural members such as those found in automotive, aviation, or marine applications. More particularly, the inventive reinforcing members include a thermally expansible, foaming reinforcing material that is secured to a carrier or support which maintains the reinforcing member in the desired orientation within the cavity, frame, or rail of the structural member until the material is thermally expanded. The reinforcing material comprises a plurality of spaced-part ribs or fins which permit heated air to contact a greater surface area of the material so as to improve volumetric expansion performance thereof

Description of the Prior Art

During the design and development of automobiles, trucks, aircraft, watercraft, etc., much of the body structure includes hollow cavities, rails, or frame sections. Many times, the structural integrity of the body is improved through increasing the stiffness in localized critical areas. Increased stiffness in localized critical areas generally result in reduced vibration, noise, and/or fatigue propagation. Additional stiffness in these areas has also utilized energy management during crash, crush, or impact situations. Many attempts have been made to reinforce these cavities. One such method involves introducing self-sustaining reinforcing products into the cavity, either with or without a support or carrier structure. However, these methods generally result in the addition of excess weight to the structural member which is undesirable in most instances.

Attempts have also been made to utilize reinforcing products which are lighter in weight or which do not use a support structure, but these attempts usually involve products which lack the necessary strength for properly reinforcing the structural member. Furthermore, many of the cavities to be reinforced are irregular in shape or narrow in size, thus making them difficult to sufficiently position currently available reinforcing apparatuses therein. Even if the self-sustaining reinforcing product is successfully inserted into the particular cavity, many times it does not sufficiently expand upon heating due to the fact that the center of the material not being properly heated during the activation process. That is, the size of the foam product is sufficiently thick that the core of the product is exposed to minimal heat, thus preventing the core from fully expanding. This can lead to an inadequately reinforced structural member.

U.S. Patent No. 5,344,208 Bien et al. is directed towards a one-piece plastic bracket for supporting a sealer block of heat expansible reinforcement material on the substructure of a vehicle. While the reinforcement assembly disclosed by Bien et al. may be useful for sealing some cavities, the sealer block provided would not sufficiently fill irregular in shape or narrow in size cavities which are common in many motor vehicles.

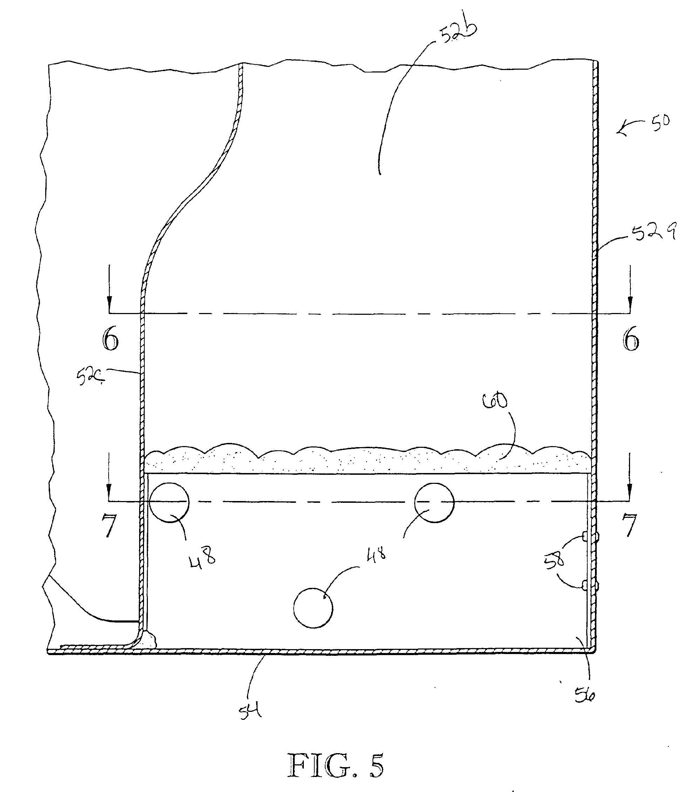

U.S. Patent No. 5,213,391 to Takagi discloses a body skeleton structure for a vehicle comprising an inner panel (3) of a front pillar (1) with which a bracket section (16) is integrally formed (see Figs. 5-7). The bracket section (16) extends towards an inner surface of an outer panel (2) and includes flanges (17) having thermally foaming rubber sheet (18a) adhered to its outer surfaces. Rubber sheet (18a) expands upon heating in order to minimize gaps around the bracket section (16). The Takagi structure is deficient in that a bracket section (16) must be integrally formed with pillar (1). Furthermore, bracket (16) must have an overall shape which corresponds to that of the cross-sectional shape of pillar (1) and an overall size which is only slightly less than the cross-sectional size of pillar (1) in order to minimize the likelihood of gaps within the pillar. This requires substantial work on the part of the vehicle manufacturer, thus leading to increased costs.

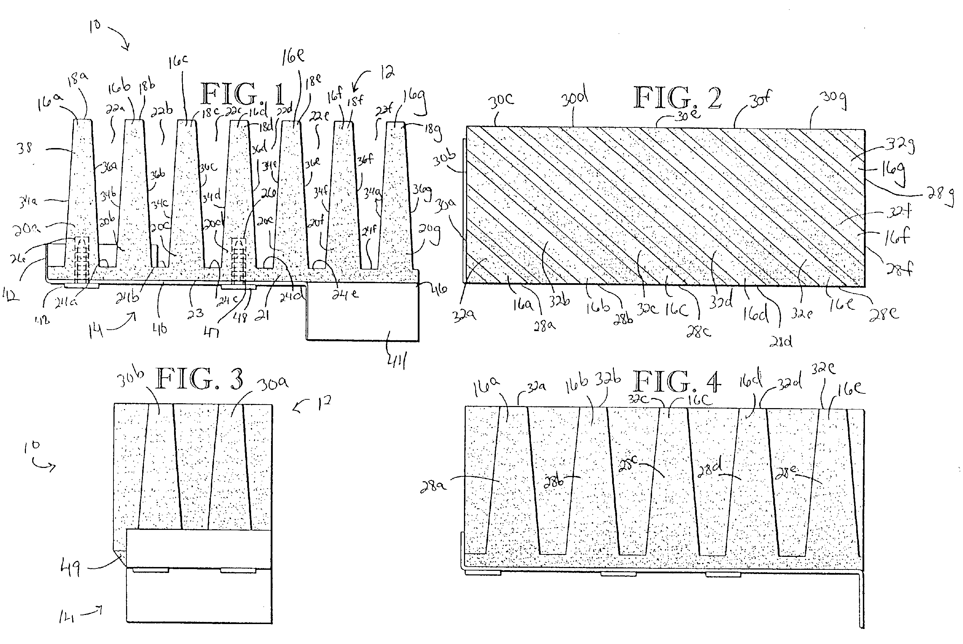

U.S. Patent No. 5,755,486 to Wycech is directed towards a w-shaped reinforcement member that carries a thermally expansible resin-based material (see Figs. 1-4). The w-shaped reinforcement member is placed in the channel of a hollow structural member over a transverse pin which fits through the slot of the w-shaped member and maintains it in position until such time as the material is heat-expanded. The Wycech reinforcement member is lacking in that it does not properly reinforce narrow or irregular-shaped cavities, thus limiting its applications in motor vehicles.

Finally, other types of prior art reinforcing products are tacky in nature, and thus cannot readily be positioned at the exact required location in the selected cavity. Such products also generally present unique packaging problems to the manufacturer, and require special handling during installation.

SUMMARY OF THE INVENTION

The instant invention overcomes these problems by providing a thermally expansible, foaming, reinforcing member for reinforcing a hollow structural member (such as one in an automobile rail) at a pre-determined location within the cavity.

In more detail, the reinforcing member includes a portion formed of a thermally expansible, foaming, reinforcing material. The reinforcing material is preferably a synthetic, resin-based material which expands when subjected to temperatures achieved at specific points in a manufacturing process (e.g., such as during the paint or powder bake stages of automobile manufacturing processes). This expansion is achieved either by internally created thermal energy or by the external application of heat to activate the material. As used herein, the term "thermally expansible" means both internally created thermal energy and the external application of heat to expand and foam the reinforcing material. The expansion temperature of the material should be at least about 300°F.

The expansible material of the inventive reinforcing member comprises at least two spaced-apart ribs (and preferably three or more ribs). The thickness of the ribs and the distance between these ribs should be such that, upon heat activation, the ribs will expand outward in all directions, contacting and "melding" with any adjacent ribs to form a substantially uniformly dense, expanded reinforcing material. Thus, the distance between the ribs can be varied, but preferably ranges from about 0.5-1.5 cm. In applications where the ribs are wider at their lower portions, the shortest distance between a pair of ribs should be at least about 0.1 cm, and preferably at least about 0.5 cm, while the longest distance between a pair of ribs can be varied but is preferably less than about 1.5 cm. These distances are important in order to allow sufficient heated air to contact all of the rib surfaces while maintaining the ribs sufficiently close to allow the expanded ribs to contact one another and form a uniform, expanded block of the material. Finally, the ribs are preferably integral with a base portion formed ofthe same thermally expansible material.

In a preferred embodiment, the inventive reinforcing member further comprises a carrier to which the expansible material is secured. The carrier is useful for maintaining the expansible material in the desired location and orientation within the cavity until thermal expansion is effected. The carrier should be formed of a material having a melting point higher than the expansion or foaming temperature of the expansible material (e.g., metal or nylon). Furthermore, the melting point of the carrier should be higher than any processing temperatures to which the intended structural member will be subjected.

The carrier can be sized and shaped as necessary to support the reinforcing member, while the expansible material is generally sized and shaped to correspond to the cross-sectional shape of the cavity in which the reinforcing member will be utilized. Furthermore, the size and shape of the carrier can be designed so as to assist in directing the flow of the thermally expanding material into small and/or irregular shaped crevices while simultaneously restricting the flow of the material to other locations in the cavity.

BRIEF DESCRIPTION OF THE DRAWINGS

Figure 1 is a perspective view of a molded, ribbed structural reinforcing member according to the invention;
Fig. 2 is a top view of the reinforcing member of Fig. 1, with the reinforcing member rotated counterclockwise until the carrier is in a horizontal orientation;
Fig. 3 is a left end view of the reinforcing member as viewed in Fig. 2;
Fig. 4 is a front view of the reinforcing member as viewed in Fig. 2;
Fig. 5 is a plan view depicting the reinforcing member of Figs. 1-4 in a structural member after thermal expansion of the reinforcing material;
Fig. 6 is a vertical cross-sectional view taken along line 6-6 of the reinforcing member and structural member combination depicted in Fig. 5;
Fig. 7 is a vertical cross-sectional view taken along line 7-7 of the reinforcing member and structural member combination depicted in Fig. 5;
Fig. 8 is a perspective view of an alternate embodiment of the inventive reinforcing member wherein bend tabs are utilized to retain the thermally expansible foaming material on the carrier;
Fig. 9 is a plan view depicting the reinforcing member of Fig. 8 in a structural member after thermal expansion of the reinforcing material; and
Fig. 10 is a vertical cross-sectional view taken along line 10-10 of the reinforcing member and structural member combination depicted in Fig. 9.

DETAILED DESCRIPTION OF THE PREFERRED EMBODIMENTS

Figs. 1-4 illustrate a preferred ribbed reinforcing member according to the invention. Referring to Fig. 1, the reinforcing member 10 includes a thermally expansible foaming material 12 and a carrier 14. Expansible, reinforcing material 12 is formed of a plurality of angularly oriented fins or ribs 16a-g having respective upper ends 18a-g and respective lower ends 20a-g. Ribs 16a-g are each preferably integrally connected with a base 21 having a forward margin 23 so that each pair of ribs 16a-g forms a valley 22a-f therebetween, with each of the valleys 22a-f being formed in part by a bottom surface 24a-f which is a surface shared by the base 21. Ribs 16a, 16c, and 16d further include threaded openings 26, shown in phantom.

Referring to Figs. 2-4, each of ribs 16a-g is free-standing (i.e., the ribs do not include any type of carrier or retaining means on their respective surfaces) and includes a generally flush, forward surface 28a-g, a generally flush, rearward surface 30a-g, and a generally horizontal, upper surface 32a-g. Surfaces 30c-g and 28a-e are essentially parallel to forward margin 23 of base 21 while surfaces 30a,b and 28f,g are essentially perpendicular to forward margin 23 of base 21. Each of ribs 16a-g include respective leftward outer surfaces 34a-g and rightward outer surfaces 36a-g. Referring to Figs 1, 2, and 4, it can be seen that each of ribs 16a-g is wider at its respective lower end 20a-g. As a result, each of valleys 22a-f become narrower towards their respective bottom surfaces 24a-f

Each of the above-described components of reinforcing material 12 is preferably integrally connected to one another and formed of the same thermally expansible composition 38 The composition 38 used in the present invention is a dry, initially non-tacky material that develops adhesion upon expansion so that it adheres to the surrounding structural members when activated. Activation may be by heating, such as occurs in automobile assembly plants. When subjected to a temperature of at least about 300°F, the thermally expansible foaming material should have a percent expansion of at least about 40%, preferably at least about 125%, and more preferably from about 150-300%, to provide sufficient structural reinforcement and compressive strength. As used herein, the percent expansion is defined as:

$$100 \times \{[(\text{the specific gravity of the material 12 before heating}) - (\text{the}$$

$$\text{specific gravity of the material 12 after heating})]/(\text{the specific gravity of}$$

$$\text{the material 12 after heating})\}.$$

One preferred composition 38 for use as reinforcing material 12 is commercialized under the name SikaReinforcer (Sika Corporation, Madison Heights, Michigan). In more detail, the most preferred composition 38 comprises: from about 20-30% by weight of a styrene-butadiene-styrene (SBS) block co-polymer (e.g., Fina Clear 530® ); from about 5-20% by weight of a polystyrene (e.g., Fina Crystal 500® and Fina Crystal 535® ); from about 30-45% by weight of a bisphenol A-based liquid epoxy resin (e.g. Araldite 6010® and Epon 71® ); from about 0.5-5% by weight of a pigment such as carbon black; up to about 5% by weight butadiene acrylonitrile rubber (Nipol 1411); from about 1-10% by weight hydrated amorphous silica (HiSil 233); from about 10-20% by weight glass microspheres (Scotchlite S60); from about 0.1-5% by weight of a blowing agent such as azodicarbonamide (e.g., Celogen AZ 765® , Celogen AZ 754A® , and Celogen AZ 130® ); from about 0.1-5% by weight of a catalyst such as N, N, dimethyl phenyl urea (U405); from about 0.1-5% by weight of a curing agent such as dicyandiamide (DDA10); and up to about 5% by weight of a "kicker" such as zinc oxide to lower the blowing temperature, with all percents by weight being based upon the total weight of the composition taken as 100% by weight.

A particularly preferred composition 38 for use as material 38 comprises about 12.94% by weight polystyrene, about 23.22% by weight SBS block copolymer, about 0.57% by weight carbon black, about 1.90% by weight butadiene acrylonitrile rubber, about 4.28% by weight hydrated amorphous silica, about 38.07% by weight bisphenol A-based liquid epoxy resin, about 14.75% by weight glass microspheres, about 0.46% by weight zinc oxide, about 2.85% by weight dicyandiamide, about 0.38% by weight N,N dimethyl phenyl urea, and about 0.57% by weight azodicarbonamide. In certain applications where increased compressive strength and reduced foaming and expansion is desired, the foregoing may be adjusted such that the polystyrene is reduced to about 12.63% by weight, the SBS block copolymer is reduced to about 22.59% by weight, and the butadiene acrylonitrile rubber is increased to about 2.85% by weight.

The composition 38 can be formed by mixing the SBS block co-polymer with a small portion (about 1/40th of the total amount) of the bisphenol A-based liquid epoxy resin in a heated mixer until the temperature of the mixer reaches from about 240-260°F (the temperature of the mixture within the mixer is at least about 175°F), and the mixture is substantially homogeneous, at which time the polystyrene is added to the mixer and mixing is continued. After the polystyrene is substantially mixed with the SBS block co-polymer/epoxy resin mixture, the remainder of the bisphenol A-based epoxy resin is slowly added to the mixer, stopping and starting the mixer as necessary, with the ingredients being thoroughly mixed to obtain a substantially homogeneous mixture. The desired amount of this mixture is placed in a heated mixer (set at a temperature of about 250°F) and mixing is commenced. While mixing, the carbon black and rubber are added to the mixer and mixing is stopped once a homogeneous mixture is obtained within the mixer. Either the silica or glass microspheres is added to the mixer, and mixing is resumed and continued until the mixture is homogeneous. This step is repeated, adding the other of the silica or glass microspheres.

The temperature of the mixer is then set to a temperature below 160°F, the blowing agent(s), catalyst(s), kicker, and curing agent(s) are added, and mixing is resumed and continued only until the mixture is homogeneous.

The resulting mixture is then preferably extruded into strands (at an extruder temperature of 170-180°F and screw rotation speeds of about 400 rpm) and cut into pellets. The resulting pellets are injection molded at a temperature of about 180-200 °F using injection molding equipment designed to form the desired shape of the reinforcing material 12 to be attached to the carrier 14.

Referring to Fig. 1, the carrier 14 comprises a flat plate 40 and upper and lower vertical plates 42, 44, respectively. In the embodiment shown, plates 42, 44 are essentially perpendicular to plate 40. Plate 40 and plate 44 are joined at bend 46, with plates 42, 44 being essentially parallel to one another. Reinforcing material 12 is secured to carrier 14 by way of push-pins 48 which are inserted through holes 47 in plate 40 and into openings 26. Referring to Fig. 3, the overall width of reinforcing material 12 is slightly greater than the width of plate 40, creating an "overhang" area 49.

The carrier 14 is formed of a material having a melting point that is higher than both the activation (i.e., foaming) temperature of the composition 38 of which reinforcing material 12 is formed and the temperature to which any structural member containing the reinforcing member 10 would be exposed. In the embodiment illustrated, carrier 14 is formed of steel.

The size and shape of the carrier 14 is not critical, so long as carrier 14 is capable of fitting within the cavity of the particular structural member in which it is to be utilized. Furthermore, the flow of the reinforcing material 12 should be sufficiently directed by the carrier 14 during expansion so that the expanded material contacts and adheres to the cavity walls and substantially fills any crevices.

In application, the reinforcing member 10 is preferably provided to a manufacturer preassembled (i.e., with the non-expanded material 12 attached to carrier 14) for insertion into the cavity of the desired structural member, such as during construction of an automobile. Figs. 5-7 illustrate the positioning of reinforcing member 10 in an automobile structural member. In the embodiment illustrated, a box-shaped structural member 50 is formed of steel and comprises four sidewalls 52a-d which cooperate with an endwall 54 to form a box-shaped cavity 56.

Reinforcing member 10 is inserted into structural member 50 in such a manner that the overall configuration of reinforcing material 12 corresponds to the rectangular cross-section of cavity 56. That is, reinforcing member 10 is inserted into cavity 56 so that the flat upper surfaces 32a-g of ribs 16a-g are substantially in contact with the surface of wall 52b, while the rearward surfaces 30c-g are in contact with endwall 54. Finally, surfaces 30a,b are positioned adjacent wall 52c. Lower vertical plate 44 is positioned adjacent wall 52a upon insertion of reinforcing member 10 into cavity 56. Plate 44 is then fastened to wall 52a via welds or rivets 58, thus stabilizing reinforcing member 10 within the cavity 56 until such time as the structural member 50 is exposed to an elevated temperature sufficient to activate the reinforcing material 12, causing it to foam. In applications where structural member 50 is a component of a vehicle, any of a number of process or manufacturing steps may be carried out on the vehicle body prior to thermal expansion without affecting the ability ofthe reinforcing material 12 to expand when exposed to the actual activating temperature.

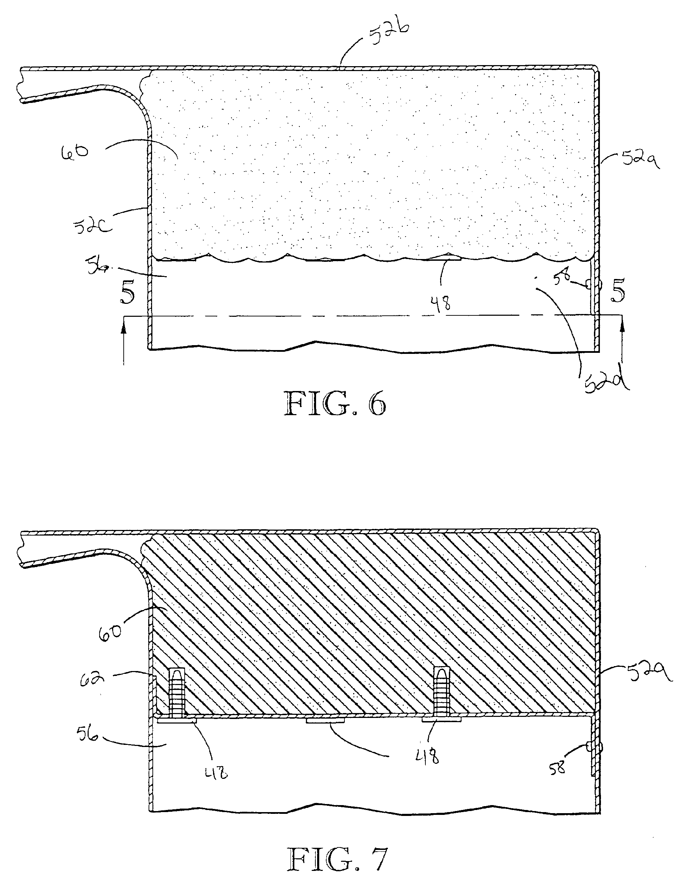

As the structural member 50 is baked, and the expansion (i.e., activation) temperature of the reinforcing material 12 is reached, the reinforcing material 12 begins to expand in all directions. That is, the reinforcing material 12 expands towards the cavity walls 52a-d and 54 forming expanded material 60. To a limited degree, reinforcing material 12 expands beyond upper vertical plate 42 at location 62 (see Fig. 7). Furthermore, reinforcing material 12 expands somewhat beyond flat plate 40, however, flat plate 40 serves to restrict the material from flowing in a direction away from wall 52d thus directing the expanding material against the cavity walls 52a-c and 54 and into the corners of the cavity 56 (see Figs. 6-7). Advantageously, this results in a dense and uniform distribution of expanded material 60 within this rather tight area of the structural member 50.

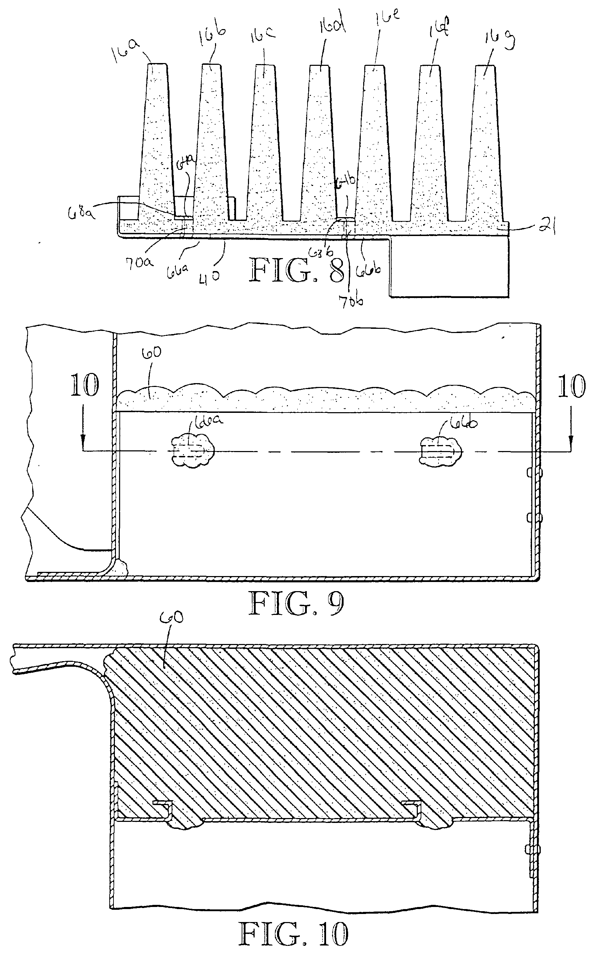

An alternate embodiment of the inventive reinforcing member is shown in Figs. 8-10, with like numbers corresponding to those numbered parts discussed previously with respect to Figs. 1-7. In this embodiment, thermally reinforcing material 12 is secured to carrier 14 via bend tabs 64a,b. Each of bend tabs 64a,b is formed by removing a strip of metal from flat plate 40 to create openings 66a,b. These metal strips are then passed through openings (not shown) in base 21 of reinforcing material 12 between ribs 16a,b and 16d,e. The metal strips are bent away from the respective plate openings 66a,b, and against surfaces 24a,d, to form an "L" configuration having respective upper legs 68a,b and respective lower legs 70a,b. Reinforcing material 12 is thus secured to carrier 14 where it will be maintained until thermal expansion thereof. Figs. 9-10 illustrate reinforcing material 12 after thermal expansion to form material 60. As illustrated, the ribs 16a-g expand outwardly in all directions thus covering tabs 64a,b. Furthermore, base 21 expands somewhat through openings 66a,b as shown in Fig. 9.

It will be appreciated that the ribbed design of reinforcing material 12 in both embodiments allows for improved expansion of the reinforcing material 12. That is, the valleys 22a-f serve as a pathway through which the heated air can travel during thermal activation. This allows the heated air to contact a large number of surfaces (i.e., leftward and rightward outer surfaces 34a-g and 36a-g as well as surfaces 28a-g, 30a-g, and 32a-g) of the reinforcing material 12 so that substantially all of the material 38 (from the surfaces to the inner core) is caused to foam, and thus expand. This is different than prior art thermally expansible, foaming, pre-formed parts which generally have core sections which receive little exposure to the heat, thus resulting in cores which are not fully foamed.

The expanded material 60 has a compressive strength (using a sample having a diameter of 2 inches and a length of 4 inches and a compression rate of 0.5 inches/minute) of at least about 1200 psi, preferably at least about 1400 psi, and more preferably at least about 1600 psi. Prior to expansion, the material 12 has a specific gravity (with reference to water) of at least about 0.90, while the specific gravity (with reference to water) of the expanded material 60 is less than about 0.47, preferably less than about 0.37, and more preferably less than about 0.32. The expanded material 60 has a ratio of compressive strength:specific gravity after bake of at least about 2500:1, preferably at least about 3000:1, and more preferably at least about 3600:1.

Although the present invention has been described with reference to the preferred embodiments illustrated in the accompanying figures, it is noted that substitutions may be made and equivalents employed without departing from the scope of the invention. For example, although the preferred embodiment is illustrated in connection with a structural member of a motor vehicle, the inventive reinforcing members may be employed in other structural members as well (e.g., in a boat, in an airplane, etc.). Furthermore, while SikaReinforcer is cited as one preferred material of which reinforcing material 12 can be formed, any material meeting the above-described strength and expansion properties is suitable.

Finally, although five fin-shaped ribs 16a-g are depicted in the attached figures, it will be appreciated that the number of ribs can be modified as necessary, depending upon the length of expanded material desired in the particular structural member as well as the thickness of each rib. The shape of the ribs 16a-g can also be altered as necessary, depending upon the cross-sectional shape of the cavity into which the reinforcing member 10 is to be inserted. Furthermore, while push-pins 48 are depicted for securing reinforcing material 12 to carrier 14, other fasteners can be used as well such as adhesives or other fastening means.

**Claims**

1. A reinforcing material (12) in the form of a self-sustaining body which is thermally expansible when heated to an expansion temperature, said body comprising first and second spaced-apart ribs (16), each of said ribs (16) being configured to expand and contact the other of said ribs (16) upon exposure of the member (10) to the expansion temperature.

2. The reinforcing material of claim 1, wherein said first rib (16) has a thickness and a height and the thickness of said first rib (16) varies along the height of said first rib (16).

3. The reinforcing material of claim 2, wherein said first rib (16) further includes respective upper (18) and lower (20) ends and the thickness of said first rib (16) is greater at said lower end (20).

4. The reinforcing material of one of the preceding claims, wherein said body further comprises a base portion (21) and said ribs (16) are secured to said base portion (21).

5. The reinforcing material of claim 4, wherein said base portion (21) and ribs (16) are integrally formed.

6. The reinforcing material of one of the preceding claims, wherein said reinforcing material (12) comprises an SBS block co-polymer, a polystyrene, a rubber, a bisphenol A-based liquid epoxy resin, carbon black, silica, glass microspheres, a blowing agent, a catalyst, and a curing agent.

7. The reinforcing material of one of the preceding claims, wherein said body comprises at least three of said spaced-apart ribs (16).

8. The reinforcing material of one of the preceding claims, wherein the distance between said ribs (16) is from about 0.5 - 1.5 cm.

9. The reinforcing material of claim 2, wherein the shortest distance between said ribs (16) is at least about 0.1 cm, and the longest distance between said ribs (16) is less than about 1.5 cm.

10. The reinforcing material of one of the preceding claims, said reinforcing material (12) having a percent expansion of at least about 95 % when heated to at least about 300°F.

11. The reinforcing material of one of the preceding claims, wherein said reinforcing material (12) has a compressive strength of at least about 1200 psi after thermal expansion thereof.

12. The reinforcing material of one of preceding claims, wherein said reinforcing material (12) has a ratio of compressive strength:specific gravity of at least 2500:1 after thermal expansion thereof.

13. A reinforcing member (10) for providing reinforcement to a structural member (50) comprising:

   a rigid carrier (14); and
   a reinforcing material (12) of one of claims 1-12 secured to said carrier (14).

14. The reinforcing member of claim 13, said reinforcing member (10) further comprising a fastening device (48,64) said carrier (14) including structure defining an opening (47) therethrough, said first rib (16) including structure defining an opening (26) therein, said fastening device (48,64) being engaged with said carrier opening (47) and said rib opening (26) so as to secure said reinforcing material (12) to said carrier (14).

15. The reinforcing member of claim 13 or 14, said carrier (14) comprising a first plate (40) having first and second surfaces, said reinforcing material (12) being secured to said first surface.

16. The reinforcing member of claim 15, said first rib (16) including an outer portion remote from said second rib (16), said carrier further comprising a second plate (42) essentially perpendicular to said first plate (40), said reinforcing material (12) being secured to said carrier (14) so that said first rib (16) outer portion contacts said second plate (42) so as to restrict the flow of the reinforcing material (12) when heated to said expansion temperature.

17. The reinforcing member of one of the claims 13-16, said carrier (14) comprising a bend tab (64) and said reinforcing material (12) being secured to said carrier (14) by said bend tab (64).

18. A reinforced structural member comprising:

   a structural member (50) having walls (52) defining a cavity (56) therein; and
   a reinforcing member (10) of one of claims 13-17 disposed in said cavity (56).

19. The reinforced structural member of claim 18, wherein said structural member (50) is a rail of a motor vehicle.

20. The reinforced structural member of claims 18 or 19, wherein said structural member (50) is a frame of a motor vehicle.

21. The reinforced structural member of one of claims 18-20, wherein said carrier (14) is secured to at least one of said cavity walls (52).

22. The reinforced structural member of claim 21, wherein said carrier (14) comprises a plate (44) having structure defining an opening therethrough and said cavity wall (52) includes structure defining an opening therethrough, said reinforced structural member (50) further comprising a fastener (58) engaged with said respective plate (44) and cavity openings for securing said carrier (14) to said structural member (50).

FIG. 1

FIG. 2

FIG. 3

FIG. 4

FIG. 5

FIG. 6

FIG. 7

FIG. 8

FIG. 9

FIG. 10